# EUROPÄISCHE PATENTSCHRIFT

(11) **EP 2 695 556 B1**
(45) Veröffentlichungstag und Bekanntmachung des Hinweises auf die Patenterteilung: **23.09.2015**
(21) Anmeldenummer: 13178667.5
(22) Anmeldetag: 31.07.2013
(51) Int. Cl.: A47J 31/44

(54) **Vorrichtung zum Bereiten von erwärmter Milch oder Milchschaum**
Device for the preparation of heated milk or milk foam
Dispositif pour préparer du lait chauffé ou de la mousse de lait

(30) Priorität: 08.08.2012 DE 102012214103
(43) Veröffentlichungstag der Anmeldung: 12.02.2014
(73) Patentinhaber: BSH Hausgeräte GmbH, 81739 München (DE)
(72) Erfinder: Breucker, Manfred, 83308 Heiligkreuz (DE); Wölfler, Andreas, 5760 Saalfelden (AT)

(56) Entgegenhaltungen:
- EP-A1- 2 220 972
- DE-U1-202007 009 537

## Beschreibung

Die Erfindung betrifft eine Vorrichtung zum Bereiten von erwärmter Milch oder Milchschaum in Kaffeevollautomaten, die eine Abgabeeinrichtung für die Milch oder den Milchschaum umfasst und über eine Milchleitung fluidisch mit einem Vorratsbehälter für Milch verbindbar ist.

Der Kaffeevollautomat "Bosch VeroBar 100" besitzt neben einer Kaffeeabgabeeinrichtung eine daneben angeordnete Milchschaumdüse. Sofern dem Kaffee Milch bzw. geschäumte Milch zugefügt werden soll, wird eine Milchleitung, welche mit der Milchschaumdüse verbunden ist, in einen Milchbehälter eingetaucht. Zum Bereiten des Milchschaums wird über die Milchleitung Milch aus dem Milchbehälter angesaugt und in der Milchschaumdüse aufgeschäumt, indem Luft mit der Milch vermischt wird. Der fertige Milchschaum wird über einen Auslass der Milchschaumdüse in das darunter stehende Gefäß abgegeben.

Bei der Milchleitung nach dem Stand der Technik handelt es sich um einen herkömmlichen Saugschlauch mit gewöhnlichem Kreisquerschnitt, durch den die Milch angesogen wird. Die Milchschaumbereitung findet anschließend innerhalb der Milchschaumdüse statt, wo die Milch mit Dampf und ggf. Luft aus dem Kaffeevollautomaten durchmischt und erwärmt oder als Milchschaum über den Auslass der Milchschaumdüse in das bereit stehende Gefäß abgegeben wird.

Das Durchmischen der Milch mit Dampf zur Erwärmung oder zusätzlich mit Luft zur Milchschaumbereitung führt zu einer Geräuschentwicklung, da der Mischprozess in der an der Vorderseite des Kaffeevollautomaten angeordneten Milchschaumdüse nahezu ungedämpft abläuft. Zur Reinigung lässt sich die Milchschaumdüse von dem Kaffeevollautomaten abnehmen, zerlegen und ggf. maschinell spülen.

Die DE 20 2007 009 537 U1 offenbart ein automatisches Milchaufschäumgerät, mit einem Aufschäumhohlraum mit einem Flügelrad, einem Ende mit einem Dampfeinlass und einem Ende mit einem Dampfauslass, wobei ein Milcheinlass und ein Milcheinlass mit einem Schlauch verbunden ist, der die Milch aus einem Milchbehältnis einsaugen kann. Der vorliegenden Erfindung liegt daher die Aufgabe zugrunde, eine Einrichtung zum Bereiten von erwärmter Milch oder Milchschaum bereitzustellen, deren Aufbau vereinfacht und daher leichter zu reinigen ist.

Diese Aufgabe wird bei der eingangs genannten Vorrichtung erfindungsgemäß dadurch gelöst, dass sie in der Milchleitung mindestens eine Zuleitung für Dampf und mindestens eine dazu parallele Rückleitung und an deren der Kaffeemaschine abgewandten Ende der Milchleitung eine Einrichtung zum Ansaugen von Milch durch Dampf unter Zuhilfenahme des Venturi-Effekts aufweist. Die Milchleitung umfasst mindestens eine Zuleitung für Dampf und mindestens eine Rückleitung für die zubereitete Milch bzw. ein Dampf-MilchGemisch. Die Milchleitung ist mit ihrem ersten Ende mit dem Kaffeevollautomaten verbunden. Ihr zweites Ende ist mit der Einrichtung zum Ansaugen von Milch verbunden. Das Ansaugen der Milch durch Dampf erfolgt unter Nutzung des Venturi-Effekts. Der Dampf, der aus dem Kaffeevollautomaten durch die Milchleitung in die Einrichtung zum Ansaugen von Milch geleitet wird, wird dort in Richtung des Kaffeevollautomaten um 180° umgelenkt. Im Bereich der Umlenkung ist eine Venturi-Düse angeordnet, die die Milch in den Dampfstrom einsaugt, der wiederum die Milch in Richtung des Kaffeevollautomaten transportiert.

Die Milchleitung umfasst jedenfalls eine Zuleitung für Dampf und jedenfalls eine Rückleitung für das Dampf-Milchgemisch. Bei mehreren Zuleitungen kann wenigstens eine für die Dampfzufuhr und wenigstens eine weitere für eine Luftzufuhr dienen, um Milchschaum zu erzeugen. Die Einrichtung zum Ansaugen von Milch ist in die im Milchbehälter enthaltene Milch eingetaucht und umfasst nach einer weiteren vorteilhaften Ausgestaltung eine Mischkammer für Dampf und Milch und eine Anzahl von Zufuhrstutzen, die der Anzahl der Zuleitungen entsprechen. Die Zufuhrstutzen besitzen Stutzenöffnungen, die mit den Öffnungen der Zuleitungen am zweiten Ende der Milchleitung korrespondieren. Die Zufuhrstutzen münden wiederum in die Mischkammer. Die Milchleitung umfasst außerdem eine Anzahl von ersten Öffnungen, die der Anzahl der Rückleitungen entspricht, mit denen sie fluidisch korrespondieren, und mindestens eine zweite Öffnung als Einlass für Milch.

Durch die Anordnung der Mischkammer an der Milchleitung verliert die nach dem Stand der Technik bekannte Milchschaumdüse teilweise ihre Notwendigkeit. Sie kann durch eine einfache Milchdüse ersetzt werden, durch die die erwärmte Milch oder der Milchschaum in ein bereit stehendes Gefäß abgegeben werden kann. Dies trägt zur Vereinfachung des Aufbaus der erfindungsgemäßen Einrichtung bei, weil die Funktionen des Milchansaugens und des Milchschäumens einerseits und die der Milchausgabe andererseits voneinander getrennt sind. Mit der Vereinfachung geht eine bessere Reinigung der erfindungsgemäßen Vorrichtung von Milchresten einher. Vor allem aber sorgt die Lage der Mischkammer, die während des Betriebs der erfindungsgemäßen Vorrichtung in der Milch eingetaucht ist, für eine ausgezeichnete Geräuschdämmung.

Die Milchleitung besteht vorzugsweise aus einer Rückleitung und mehreren Zuleitungen, wobei deren Anzahl und Querschnittsform nach dem fachmännischen Ermessen und konstruktiven Erfordernissen bestimmt werden kann. Regelmäßig weisen die Zu- und Rückleitungen kreisförmige Querschnitte auf. Als wirtschaftlich hat sich eine Anzahl von fünf Zuleitungen herausgestellt.

Sofern die Zuleitungen nach einer weiteren vorteilhaften Ausgestaltung gleichmäßig um die zentrale Rückleitung herum angeordnet werden, treffen die zugeleiteten Medien in der Mischkammer gleichmäßig aus verschiedenen Richtungen auf die durch die zweite Öffnung eingesaugte Milch. Dadurch wird eine gleichmäßige Durchmischung der Medien Dampf und Luft mit der Milch erreicht.

Alternativ kann die Zuleitung des Dampfes bzw. der warmen Luft über die zentrale Milchleitung erfolgen. Die Rückleitung geschieht dann über mehrere um die zentrale Zuleitung angeordnete Rückleitungen. Die Rückleitung durch eine einzelne Kammer ist jedoch vorzuziehen, da die Reinigung einer Mehrzahl milchberührter Rückleitungen mit geringerem Durchmesser durch die größere milchberührte Gesamtfläche aufwändiger ist.

Nach einer vorteilhaften Ausgestaltungsform der Erfindung besteht die Milchleitung zumindest in einem dem Kaffeevollautomaten abgewandten Bereich aus einem isolierenden Material. Dadurch erwärmt sich die im Milchbehälter befindliche Milch nicht zu stark, während der Dampf durch die Zuleitungen eingeleitet wird.

Nach einer weiteren vorteilhaften Ausgestaltung der Erfindung kann der Wärmeeintrag noch weiter reduziert werden, indem die Milchleitung mit luftgefüllten Isolationskammern ausgestattet ist, die um die äußeren Kammern herum angeordnet sind. Die zusätzlichen Isolationskammern verhindern das Durchdringen der Wärme durch das Schlauchmaterial erheblich. Die Isolationskammern können als Waben oder Kissen ausgestaltet sein, aus Produktionsgründen wird jedoch ihre lineare Erstreckung über die gesamte Länge der Milchleitung vorgezogen.

Nach einer weiteren Ausgestaltungsform der Erfindung ist der Durchmesser der ersten Öffnung der Mischkammer der Einrichtung zum Ansaugen von Milch kleiner als der Durchmesser der Rückleitung. Durch diesen Durchmessersprung wird der Venturi-Effekt mit einfachen Mitteln erreicht, da die unterschiedlichen Durchmesser an einer Kopplungsstelle zweier Komponenten der erfindungsgemäßen Vorrichtung, nämlich der Milchleitung einerseits und der Einrichtung andererseits, produktionsseitig leicht zu realisieren sind.

Prinzipiell kann die Einrichtung zum Ansaugen von Milch fest mit der Milchleitung verbunden sein. Nach einer weiteren Ausgestaltungsform der Erfindung ist die Einrichtung zum Ansaugen von Milch lösbar mit der Milchleitung verbunden. Dadurch ist insbesondere eine leichtere Reinigung möglich. Vorteilhaft kann es dabei sein, wenn zum erneuten Ansetzen der Einrichtung zum Ansaugen von Milch an die Milchleitung Elemente vorgesehen sind, die das passgenaue Aufsetzen der Zufuhrstutzen auf die Zuleitungen erleichtern. Hierzu könnten die Zufuhrstutzen so ausgebildet sein, dass sie in die Zuleitungen eingreifen.

Das Prinzip der Erfindung wird im Folgenden anhand von Zeichnungen beispielshalber noch näher erläutert. In der Zeichnung zeigen:
- Figur 1:: einen Kaffeevollautomaten nach dem Stand der Technik,
- Figur 2:: eine erfindungsgemäße Ausgestaltung einer derartigen Einrichtung,
- Figur 3:: einen Querschnitt durch eine Milchleitung,
- Figur 4:: einen Schnitt durch eine Einrichtung zum Ansaugen von Milch,
- Figur 5:: einen Schnitt durch eine Einrichtung zum Ansaugen von Milch mit Fließrichtungsangaben,
- Figur 6:: einen Querschnitt durch eine alternative Ausgestaltung einer Milchleitung.

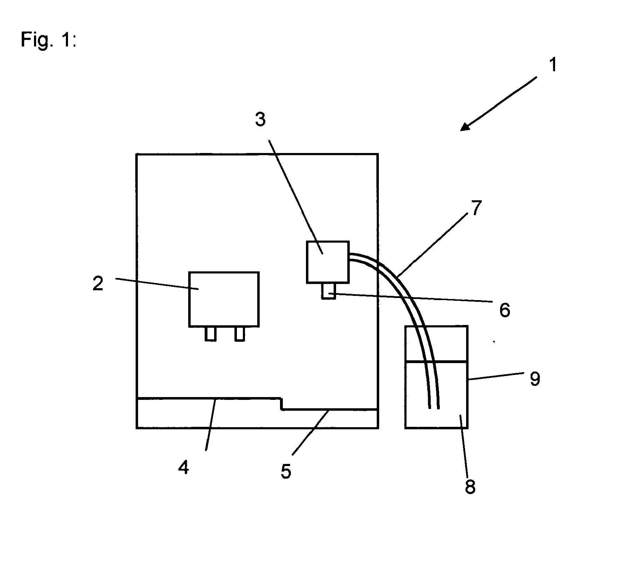

Ein Kaffeevollautomat 1 nach dem Stand der Technik weist nach Figur 1 auf einer Front- oder Bedienungsseite eine Kaffeeabgabeeinrichtung 2 und eine Milchschaumdüse 3 auf. Durch die Kaffeeabgabeeinrichtung 2 wird schwarzer Kaffee in ein unterhalb der Kaffeeabgabeeinrichtung auf einem Kaffeeabtropfgitter 4 stehendes, nicht dargestelltes Gefäß abgegeben. An der Milchschaumdüse 3, die einen Auslass 6 der Milchschaumdüse 3 aufweist, ist eine flexible Milchleitung 7 angeordnet. Die Milchleitung 7 wird zum Ansaugen von Milch 8 in einen Milchbehälter 9 eingetaucht. Nach dem Ansaugen von Milch 8 durch die Milchleitung 7 wird die Milch 8 in der Milchschaumdüse 3 zu Schaum verarbeitet.

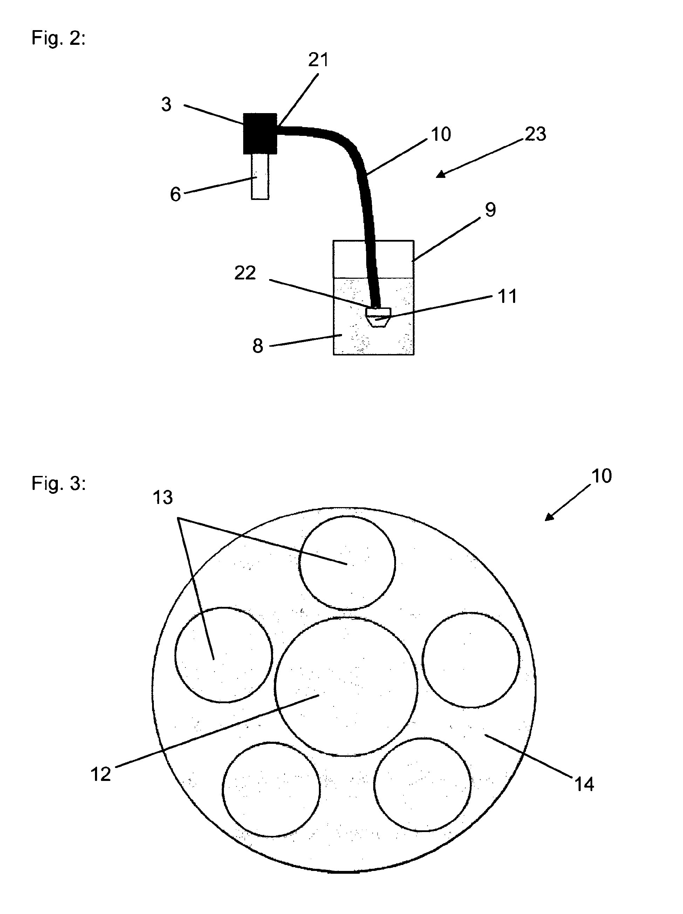

Erfindungsgemäß besteht die Einrichtung 23 zum Bereiten von erwärmter Milch oder Milchschaum nach Figur 2 aus einer Milchleitung 10 und einer Einrichtung 11 zum Ansaugen von Milch. Die Einrichtung 11 zum Ansaugen von Milch wird vollständig in die Milch 8 eingetaucht, die im Milchbehälter 9 neben dem Kaffeevollautomaten 1 bereit steht. Die Einrichtung 11 zum Ansaugen von Milch ist an einem ersten Ende 21 der Milchleitung 10 angeordnet, das vom Kaffeevollautomaten 1 abgewandt ist. Mit seinem anderen, zweiten Ende 22 ist die Milchleitung 10 an der Milchdüse 3' befestigt, die über einen herkömmlichen Auslass 6 für Milch verfügt.

Erfindungsgemäß wird ein Sogeffekt zum Ansaugen der Milch 8 über die Milchleitung 10 nicht in einer Milchschaumdüse selbst erzeugt, sondern in der Einrichtung 11 zum Ansaugen von Milch, die in die Milch 8 eintaucht. Eine Milchdüse 3', die erfindungsgemäß an die Stelle der Milchschaumdüse 3 (vgl. Figur 1) tritt, verfügt folglich über keine Mischkammer mehr, sondern dient der Zuleitung von Dampf und oder Luft in die Milchleitung 10 und dem Einleiten von Milch oder Milchschaum aus dem Ansaugelement in ein Getränkegefäß.

Dazu ist in einer ersten Ausgestaltung nach Figur 3 die Milchleitung 10 mit mehreren längs verlaufenden Kammern 12, 13 ausgestattet, so dass um eine Rückleitung 12 herum fünf Zuleitungen 13 angeordnet sind. Sie weisen jeweils einen Kreisquerschnitt auf und bilden jeweils separate und parallel zueinander verlaufende Fluidleitungen in der Milchleitung 7.

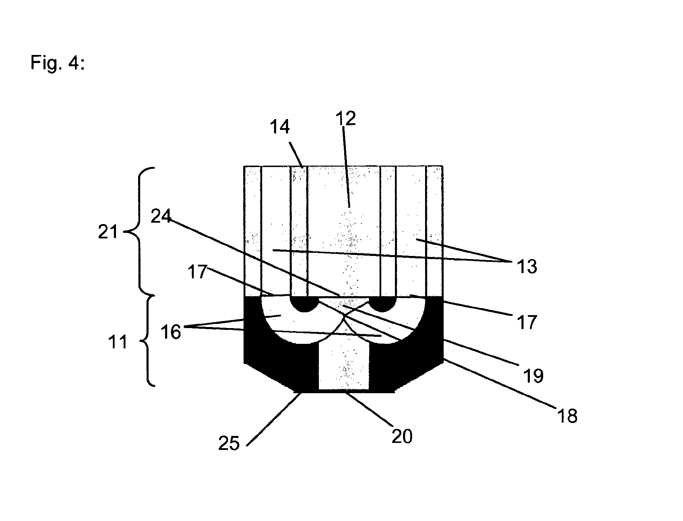

In Figur 4 sind das untere, erste Ende 21 der Milchleitung 10 und die Einrichtung 11 zum Ansaugen von Milch in einem Schnitt zu sehen. Die Rückleitung 12 und Zuleitung 13 der Milchleitung 10 schließen an korrespondierende Öffnungen 17, 19 an einer Oberseite 24 der Einrichtung 11 zum Ansaugen von Milch an. Korrespondierend zu den Zuleitungen 13 weist die Einrichtung 11 zum Ansaugen von Milch Stutzenöffnungen 17 auf, an denen nach innen gekrümmt verlaufende Zufuhrstutzen 16 anschließen, welche auf eine zentrale Mischkammer 18 gerichtet sind. Mit der Rückleitung 12 korrespondiert die zentrale erste Öffnung 19 der Mischkammer 18. Dabei weist die erste Öffnung 19 der Mischkammer 18 einen kleineren Durchmesser auf als die Rückleitung 12. Durch eine zweite Öffnung 20, die an einer Unterseite 25 der Einrichtung 11 zum Ansaugen von Milch der ersten Öffnung 19 koaxial gegenüberliegt, kann die die Einrichtung 11 zum Ansaugen von Milch umgebende Milch 8 in die Mischkammer 18 eindringen. Die Mischkammer 18 in der Einrichtung 11 zum Ansaugen von Milch ergibt sich folglich aus dem Zusammentreffen der radial mündenden Zuführstutzen 16 und der die Rückleitung 12 im Injektor fortsetzenden zentralen Öffnungen 19 und 20.

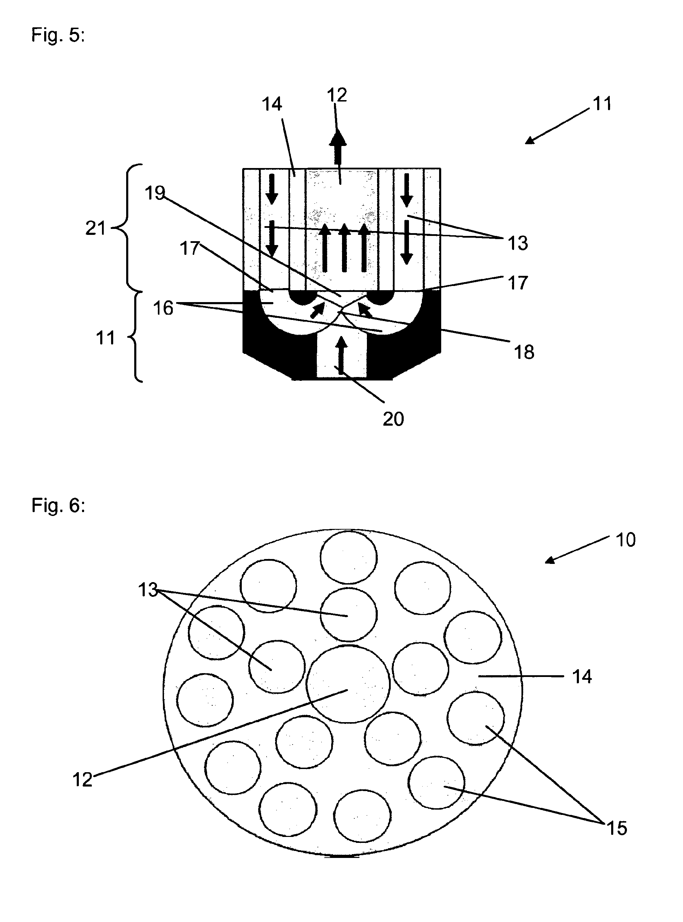

Die in Figur 4 erläuterten Zusammenhänge werden in Figur 5 durch Fließrichtungsangaben in ihrem Zusammenwirken verdeutlicht. Wie bekannt, wird auch erfindungsgemäß heißer Dampf oder Luft unter Ausnutzung des Venturi-Effekts zum Ansaugen der Milch eingesetzt. Allerdings geschieht das Ansaugen nicht in der Milchschaumdüse 3, sondern in der Einrichtung 11 zum Ansaugen von Milch. Dazu wird heißer Dampf oder Luft durch die Zuleitungen 13 über die Stutzenöffnungen 17 in die Zufuhrstutzen 16 geleitet. An ihrem Ende bilden sie die Mischkammer 18, die mit der ersten Öffnung 19 in die durchmessergrößere Rückleitung 12 mündet. Der Sog, der am Durchmessersprung zwischen der ersten Öffnung 19 und der Rückleitung 12 entsteht, saugt durch die zweite Öffnung 20 der Mischkammer 18 Milch 8 in die Mischkammer 18 hinein, wo sie zu Milchschaum oder erwärmter Milch aufbereitet wird. Durch die erste Öffnung 19 der Mischkammer 18 wird der Milchschaum bzw. die erwärmte Milch sodann in die Rückleitung 12 eingeleitet und dem Kaffeevollautomaten 1 zugeführt.

Die Milchleitung 10 leitet also nicht nur die Milch 8 zum Kaffeevollautomaten 1, sondern auch heißen Dampf in die Einrichtung 11 zum Ansaugen von Milch. Da diese Einrichtung 11 in die Milch 8 eintaucht, kann Wärmeenergie des Dampfes in die Milch 8 gelangen. Daher ist die Milchleitung 10 aus Neopren ausgebildet. Damit sind die Rückleitung 12, vor allem aber die außen liegenden Zuleitungen 13 in Neopren als Isolationsmaterial 14 eingebettet, um eine Wärmeabgabe in den Milchbehälter 9 weitgehend gering zu halten.

Die Isolationseigenschaften sind durch die Milchleitung 10 gemäß Figur 6 noch erhöht. Die dort gezeigte Milchleitung 10 weist neben der Rückleitung 12 und den Zuleitungen 13 Isolationskammern 15 auf, die um die Zuleitungen 13 herum angeordnet sind. So wird der Abstand zwischen den Dampf führenden Zuleitungen 13 und der die Milchleitung 10 umgebenden Milch 8 noch erhöht und diese besser gegen unerwünschte Erwärmung im Milchbehälter 9 geschützt.

Da es sich bei den vorhergehenden, detailliert beschriebenen Einrichtungen zum Ansaugen von Milch für die Milchschaumbereitung bei Kaffeevollautomaten um Ausführungsbeispiele handelt, können sie in üblicher Weise vom Fachmann in einem weiten Umfang modifiziert werden, ohne den Bereich der Erfindung zu verlassen. Insbesondere kann auch die Anzahl der Außenkammern und Isolationskammern verringert oder erhöht und deren Anordnung variiert werden und folglich die Ausgestaltung der Einrichtung in anderer Form als in der hier beschriebenen erfolgen. Ebenso kann die Ausgestaltung des Injektors in einer anderen Form vorgenommen werden, wenn dies z. B. aus designerischen Gründen notwendig ist. Weiter schließt die Verwendung der unbestimmten Artikel "ein" bzw. "eine" nicht aus, dass die betreffenden Merkmale auch mehrfach bzw. mehrmals vorhanden sein können.

### Bezugszeichenliste

- 1: Kaffeevollautomat
- 2: Kaffeeabgabeeinrichtung
- 3: Milchschaumdüse
- 3': Milchdüse
- 4: Kaffeeabtropfgitter
- 5: Milchabtropfgitter
- 6: Auslass der Milch(schaum)düse
- 7: Milchleitung
- 8: Milch
- 9: Milchbehälter
- 10: Milchleitung
- 11: Einrichtung zum Ansaugen von Milch 8
- 12: Rückleitung
- 13: Zuleitung
- 14: Isolationsmaterial
- 15: Isolationskammer
- 16: Zufuhrstutzen
- 17: Stutzenöffnung
- 18: Mischkammer
- 19: Erste Öffnung
- 20: Zweite Öffnung
- 21: Erstes Ende der Milchleitung 10
- 22: Zweites Ende der Milchleitung 10
- 23: Einrichtung zum Bereiten von erwärmter Milch und Milchschaum
- 24: Oberseite der Einrichtung 11
- 25: Unterseite der Einrichtung 11

## Patentansprüche

1. Vorrichtung zum Bereiten von erwärmter Milch oder Milchschaum an einem Kaffeevollautomaten (1), die eine Abgabeeinrichtung (3; 3') für die Milch (8) oder den Milchschaum umfasst und über eine Milchleitung (7; 10) fluidisch mit einem Milchbehälter (9) verbindbar ist, **gekennzeichnet durch** mindestens eine Zuleitung (13) für Dampf und mindestens eine dazu parallele Rückleitung (12) in der Milchleitung (7) und **durch** eine Einrichtung (11) an ihrem der Kaffeemaschine (1) abgewandten Ende (22) zum Ansaugen von Milch (8) **durch** Dampf unter Zuhilfenahme des Venturi-Effekts.

2. Vorrichtung nach dem obigen Anspruch mit mehreren Zuleitungen (13), **dadurch gekennzeichnet, dass** mindestens eine Zuleitung (13) als Dampfleitung und mindestens eine weitere Zuleitung (13) als Luftleitung ausgebildet ist.

3. Vorrichtung nach Anspruch 1, **dadurch gekennzeichnet, dass** die Einrichtung (11)
• eine Mischkammer (18) für Dampf und Milch aufweist,
• eine der Anzahl der Zuleitungen (13) entsprechende Anzahl von und mit ihnen fluidisch korrespondierende Zufuhrstutzen (16) aufweist, die in der Mischkammer (18) münden,
• und die Mischkammer (18) eine der Anzahl der Rückleitungen (12) entsprechende Anzahl und mit ihnen fluidisch korrespondierende erste Öffnungen (19) und mindestens eine zweite Öffnung (20) als Einlass für Milch (8) aufweist.

4. Vorrichtung nach einem der vorgenannten Ansprüche, **dadurch gekennzeichnet, dass** die Milchleitung (10) eine zentrale Rückleitung (12) und fünf zur und konzentrisch um die Rückleitung (12) herum angeordnete Zuleitungen (13) aufweist.

5. Vorrichtung nach Anspruch 3, **dadurch gekennzeichnet, dass** die Zuleitungen (13) konzentrisch um die Rückleitung (12) angeordnet sind.

6. Vorrichtung nach den Ansprüchen 3 bis 5, **dadurch gekennzeichnet, dass** bei der Bereitung von Milchschaum mindestens eine der Zuleitungen (13) mit Dampf durchströmt ist und bei der Bereitung von Milch mindestens eine der Zuleitungen (12) mit Luft durchströmt ist.

7. Vorrichtung nach einem der vorgenannten Ansprüche, **dadurch gekennzeichnet, dass** die Milchleitung (10) zumindest in einem dem Kaffeevollautomaten (1) abgewandten Bereich aus einem isolierenden Material besteht.

8. Vorrichtung nach einem der vorgenannten Ansprüche, **gekennzeichnet durch** eine Milchleitung (10), mit Isolationskammern (15).

9. Vorrichtung nach einem der vorgenannten Ansprüche 2 bis 8, **dadurch gekennzeichnet, dass** der Durchmesser der ersten Öffnung (19) kleiner als der Durchmesser der Rückleitung (12) ist.

10. Vorrichtung nach einem der vorgenannten Ansprüche, **dadurch gekennzeichnet, dass** die Einrichtung (11) lösbar mit der Milchleitung (10) verbunden ist.

## Claims

1. Device for the preparation of heated milk or milk foam in a fully automatic coffee machine (1), wherein said device comprises a dispensing facility (3; 3') for the milk (8) or the milk foam and can be fluidically connected to a milk container (9) via a milk line (7; 10), **characterised by** at least one supply line (13) for vapour, and at least one return line (12) parallel thereto in the milk line (7) and by a facility (11) at the end (22) thereof facing away from the coffee machine (1) for suction of milk (8) by vapour by utilising the Venturi effect.

2. Device according to the above claim having a plurality of supply lines (13), **characterised in that** at least one supply line (13) is designed as a vapour line and at least one further supply line (13) is designed as an air line.

3. Device according to claim 1, **characterised in that** the facility (11)
• has a mixing chamber (18) for vapour and milk,
• has a number of feed connections (16) matching the number of supply lines (13) and fluidically corresponding thereto, which open into the mixing chamber (18),
• and the mixing chamber (18) has a number of first openings (19) matching the number of return lines (12) and fluidically corresponding thereto, and has at least one second opening (20) as an inlet for milk (8).

4. Device according to one of the preceding claims, **characterised in that** the milk line (10) has a central return line (12) and five supply lines (13) to, and arranged concentrically about, the return line (12).

5. Device according to claim 3, **characterised in that** the supply lines (13) are arranged concentrically about the return line (12).

6. Device according to claims 3 to 5, **characterised in that** in the preparation of milk foam vapour flows through at least one of the supply lines (13) and in the preparation of milk air flows through at least one of the supply lines (12).

7. Device according to one of the preceding claims, **characterised in that** the milk line (10) consists of an insulating material, at least in a region facing away from the fully automatic coffee machine (1).

8. Device according to one of the preceding claims, **characterised by** a milk line (10), having insulation chambers (15).

9. Device according to one of the preceding claims 2 to 8, **characterised in that** the diameter of the first opening (19) is smaller than the diameter of the return line (12).

10. Device according to one of the preceding claims, **characterised in that** the facility (11) is detachably connected to the milk line (10).

## Revendications

1. Dispositif pour la préparation de lait chauffé ou de mousse de lait sur une machine à café entièrement automatique (1) qui comprend un système de distribution (3 ; 3') pour le lait (8) ou la mousse de lait et peut être raccordé par le biais d'une conduite de lait (7 ; 10) de manière fluidique à un récipient de lait (9), **caractérisé par** au moins une alimentation (13) pour de la vapeur et au moins une conduite de renvoi (12) parallèle à l'alimentation dans la conduite de lait (7) et par le biais d'un système (11) sur son extrémité (22) opposée à la machine à café (1) pour l'aspiration du lait (8) par le biais de la vapeur avec l'aide de l'effet venturi.

2. Dispositif selon la revendication ci-dessus avec plusieurs alimentations (13), **caractérisé en ce qu'**au moins une alimentation (13) est constituée en tant que conduite de vapeur et au moins une autre alimentation (13) est constituée en tant que conduite d'air.

3. Dispositif selon la revendication 1, **caractérisé en ce que** le système (11)
• présente une chambre de mélange (18) pour la vapeur et le lait,
• présente un nombre, correspondant au nombre d'alimentations (13), de tubulures d'alimentation (16) correspondant de manière fluidique avec celles-ci, qui débouchent dans la chambre de mélange (18),
• et la chambre de mélange (18) présente un nombre correspondant au nombre de conduites de renvoi (12) et des premières ouvertures (19) correspondant avec celles-ci de manière fluidique et au moins une deuxième ouverture (20) en tant qu'admission pour le lait (8).

4. Dispositif selon l'une des revendications précédentes, **caractérisé en ce que** la conduite de lait (10) présente une conduite de renvoi centrale (12) et cinq alimentations (13) disposées par rapport à et concentriquement autour de la conduite de renvoi (12).

5. Dispositif selon la revendication 3, **caractérisé en ce que** les alimentations (13) sont disposées concentriquement autour de la conduite de renvoi (12).

6. Dispositif selon l'une des revendications 3 à 5, **caractérisé en ce que** lors de la préparation d'une mousse de lait au moins l'une des alimentations (13) est traversée par de la vapeur et lors de la préparation d'un lait au moins l'une des alimentations (12) est traversée par de l'air.

7. Dispositif selon l'une des revendications précédentes, **caractérisé en ce que** la conduite de lait (10) au moins dans une zone opposée à la machine à café entièrement automatique (1) se compose d'un matériau isolant.

8. Dispositif selon l'une des revendications précédentes, **caractérisé par** une conduite de lait (10), avec des chambres isolantes (15).

9. Dispositif selon l'une des revendications précédentes 2 à 8, **caractérisé en ce que** le diamètre de la première ouverture (19) est plus petit que le diamètre de la conduite de renvoi (12). '

10. Dispositif selon l'une des revendications précédentes, **caractérisé en ce que** le système (11) est raccordé de manière amovible à la conduite de lait (10).
